# EUROPÄISCHE PATENTSCHRIFT

(11) **EP 4 154 716 B1**
(45) Veröffentlichungstag und Bekanntmachung des Hinweises auf die Patenterteilung: **09.09.2026**
(21) Anmeldenummer: 22196296.2
(22) Anmeldetag: 19.09.2022
(51) Int. Cl.: A21C 3/02

(54) **TEIGVERARBEITUNGSVORRICHTUNG UND TEIGVERARBEITUNGSANLAGE**
DOUGH PROCESSING DEVICE AND DOUGH PROCESSING SYSTEM
DISPOSITIF DE TRAITEMENT DE PÂTE ET INSTALLATION DE TRAITEMENT DE PÂTE

(30) Priorität: 22.09.2021 DE 102021124557
(43) Veröffentlichungstag der Anmeldung: 29.03.2023
(73) Patentinhaber: Fritsch Bakery Technologies GmbH & Co. KG, 97348 Markt Einersheim (DE)
(72) Erfinder: Hoos, Josef, 97348 Markt Einersheim (DE); Fackelmann, Markus, 97334 Sommerach (DE); van der Wal, Frank, 97348 Markt Einersheim (DE); Gier, Michael, 97318 Kitzingen (DE)
(74) Vertreter: Grünecker Patent- und Rechtsanwälte PartG mbB

(56) Entgegenhaltungen:
- EP-A1- 0 161 076
- EP-A1- 0 197 671
- EP-A1- 1 203 533
- EP-A2- 0 947 136
- CN-U- 205 431 794
- IT-A1- VI20 110 142
- US-A- 4 631 017

## Beschreibung

Die Erfindung bezieht sich auf Teigverarbeitungsvorrichtungen, die zum Walzen eines Teiges konfiguriert sind.

Aus der EP 1 230 857 B1 ist ein Teigbandformer bekannt, der aus einer formlosen Teigmasse ein Teigband formen soll. Solche Vorrichtungen werden am Beginn einer Teigverarbeitungsanlage eingesetzt, da dort eine formlose Teigmasse angeliefert wird, aus der zunächst ein Teigband geformt werden muss, um die weitere Verarbeitung zu ermöglichen. Gemäß der der EP 1 230 857 B1 wird dazu die Teigmasse durch zwei Formungswalzen gewalzt. Des Weiteren sind Führungsscheiben vorgesehen, die an Stirnseiten der der Formungswalzen derart angeordnet sind, dass sie einen zwischen den Formungswalzen vorgesehenen Spalt quer zu einer Durchgangsrichtung überdecken.

Aus der AT 502 608 A1 ist eine Vorrichtung und ein Verfahren zum Kneten und Ausrollen eines Nahrungsmittelteigstreifens bekannt. Die dort offenbarte Vorrichtung umfasst eine Förder- und Ausrollrolle und einen Planetenrollmechanismus mit mehreren Planetenrollen. Durch letztere soll der Nahrungsmittelteigstreifen geschlagen bzw. geknetet und ausgerollt werden. Derartige Vorrichtungen werden bisher nur für die Bearbeitung von bereits geformten Teigbändern eingesetzt. D. h. Teigverarbeitungsanlagen zum Erzeugen von Teigprodukten umfassen in der Regel einen Teigbandformer, der ein Teigband aus einer Teigmasse erzeugt, und eine weitere Vorrichtung, die das vorher erzeugte Teigband knetet und ausrollt. Dadurch entstehen Anlagen, die große Stellflächen beanspruchen. Bisher können solche Anlagen daher nur in Großbetrieben eingesetzt werden.

Auch CN 205 431 794 U und EP 0 947 136 A2 offenbaren Teigverarbeitungsvorrichtungen nach dem Stand der Technik.

Es ist eine Aufgabe der Erfindung, eine Teigverarbeitungsvorrichtung anzugeben, die eine kompaktere Bauform von Teigverarbeitungsanlagen zum Erzeugen von Teigprodukten, in denen sie eingesetzt wird, ermöglicht. Dadurch soll auch kleineren Betrieben eine Automatisierung der Produktion ermöglicht werden.

Diese Aufgabe wird gelöst durch eine Teigverarbeitungsvorrichtung mit den Merkmalen des Anspruchs 1 sowie durch eine Teigverarbeitungsanlage zum Erzeugen von Teigprodukten mit den Merkmalen des Anspruchs 8.

Es wird eine Teigverarbeitungsvorrichtung mit einer Fördervorrichtung, die zum Fördern des Teigs in einer Produktionsrichtung konfiguriert ist, und einer Walzstation offenbart. Die Walzstation umfasst eine Satellitenwalze mit einer Trommel und mindestens zwei Walzen, die zum Eingreifen mit dem Teig konfiguriert sind, wobei die Trommel um eine Trommelachse rotierbar ist, und durch eine Rotation der Trommel die Walzen um die Trommelachse drehbar sind. Die Walzstation umfasst des Weiteren eine Gegenwalze, die der Satellitenwalze gegenüberliegend angeordnet ist, wobei die Walzstation dazu konfiguriert ist, den Teig zwischen der Satellitenwalze und der Gegenwalze zu walzen. Die Teigverarbeitungsvorrichtung zeichnet sich dadurch aus, dass die Walzstation ein erstes Führungselement umfasst, das dazu konfiguriert ist, ein Ausweichen des Teigs in einer ersten Begrenzungsrichtung zu begrenzen, die quer, vorzugsweise senkrecht, zu der Produktionsrichtung orientiert ist, wobei das Führungselement des Weiteren dazu konfiguriert ist, das Fördern des Teigs zu unterstützen.

Als das Fördern des Teigs unterstützend können verschiedene Maßnahmen angesehen werden, die eine den Teig bremsende Wirkung des Führungselements reduzieren. Denkbar sind bspw. eine entsprechende Bewegbarkeit des Führungselements oder reibungsvermindernde Maßnahmen, wie z. B. eine Anti-Haft-Beschichtung des Führungselements oder Auftragen eines Trennmittels wie z. B. Mehl oder Öl auf das Führungselement. Unter dem Begriff Teig, wie er vorstehend und im Folgenden mit Bezug auf den Anmeldungsgegenstand genutzt wird, kann Teig in beliebigen denkbaren Formen verstanden werden, z. B. in Form einer im Wesentlichen ungeformten Teigmasse, in Form von im Wesentlichen ungeformten Teigportionen, in Form eines im Wesentlichen ungeformten Teigstrangs, in Form eines auf ein bestimmtes Maß geformtes Teigbands oder in sämtlichen Übergangsformen zwischen den genannten.

Durch das Vorsehen eines Führungselements kann ein Einsatz einer Teigverarbeitungsvorrichtung mit einer Satellitenwalze zum Teigbandformen ermöglicht werden. Gleichzeitig kann sie die Funktion des Ausrollens und Knetens übernehmen, sodass diese Funktion nicht durch eine zusätzliche, dem Teigbandformer nachgeordnete Vorrichtung erfüllt werden muss. Durch die ermöglichte Doppelfunktion kann also auf eine zusätzliche Vorrichtung zum Ausrollen und Kneten des Teigbands verzichtet und so Stellfläche eingespart werden.

Es kann vorteilhaft sein, wenn die Teigverarbeitungsvorrichtung ein zweites Führungselement umfasst, das dazu konfiguriert ist, ein Ausweichen des Teigs in einer zweiten Begrenzungsrichtung zu begrenzen, die der ersten Begrenzungsrichtung entgegengesetzt orientiert ist. Dadurch kann es ermöglicht werden, ein Teigband mit einer definierten Breite zu erzeugen. Besonders günstig ist es, wenn das zweite Führungselement mit Bezug auf die Satellitenwalze und/oder die Gegenwalze dem ersten Führungselement gegenüberliegend angeordnet ist. Dadurch können die beiden Führungselemente, die Satellitenwalze und die Gegenwalze einen Spalt definieren, der ein besonders genaues Formen des Teigbands ermöglicht.

Es ist denkbar, dass das erste und/oder das zweite Führungselement jeweils eine rotierbare Scheibe aufweist. Auf diese Weise lässt sich besonders einfach eine kontinuierliche Unterstützung des Förderns des Teigs erreichen.

Besonders günstig ist es, wenn die rotierbare Scheibe antreibbar ist, vorzugsweise motorisiert und/oder mit einer Fördergeschwindigkeit der Fördervorrichtung synchronisiert. Als motorisiert antreibbare, rotierbare Scheibe kann eine durch einen Motor, bspw. einen Elektromotor, direkt oder indirekt, bspw. über ein Getriebe, antreibbare Scheibe angesehen werden. Als mit einer Fördergeschwindigkeit der Fördervorrichtung synchronisiert antreibbar kann eine rotierbare Scheibe angesehen werden, wenn durch eine Änderung der Fördergeschwindigkeit der Fördervorrichtung automatisch eine Änderung der Antriebsgeschwindigkeit der Scheibe bewirkt wird. Eine Synchronisierung des Antriebs der rotierbaren Scheibe mit der Fördergeschwindigkeit der Fördervorrichtung kann durch eine Kopplung der rotierbaren Scheibe mit einem Antrieb der Fördervorrichtung erreicht werden. Insbesondere kann die rotierbare Scheibe durch ein Getriebe mit dem Antrieb der Fördervorrichtung verbunden sein. Es ist jedoch auch denkbar, dass die Geschwindigkeit eines die rotierbare Scheibe direkt oder indirekt antreibender Motors basierend auf der Fördergeschwindigkeit der Fördervorrichtung einstellbar ist.

Es kann vorteilhaft sein, wenn die Walzen jeweils um eine Walzenachse rotierbar sind, die parallel zu der Trommelachse orientiert ist. In einer solchen Konfiguration können die Walzen beim Eingreifen mit dem Teigband auf dem Teigband abrollen. Das kann die Reibung zwischen Teigband und Walze reduzieren und dadurch den Teig schonen.

Die Trommel weist zwei Platten auf, wobei die Walzen jeweils zwischen den zwei Platten angeordnet sind. Besonders günstig ist es, wenn die Walzen an den Platten jeweils rotierbar gelagert sind. Wie bereits erwähnt, können in einer solchen Konfiguration die Walzen beim Eingreifen mit dem Teigband auf dem Teigband abrollen. Das kann die Reibung zwischen Teigband und Walze reduzieren und dadurch den Teig schonen.

Zwischen den Platten und den Walzen ist jeweils ein parallel zu der Trommelachse orientierter Abstand vorgesehen, der dimensioniert ist, um das erste Führungselement wenigstens teilweise aufzunehmen. Besonders günstig ist es, wenn der Abstand dimensioniert ist, um jeweils das Führungselement wenigstens teilweise aufzunehmen. Dadurch kann es ermöglicht werden, dass das Führungselement bzw. die Führungselemente möglichst nah an den Walzen angeordnet werden können, sodass möglichst wenig Teig zwischen die Walzen und das Führungselement bzw. die Führungselemente gelangen kann.

Die Anmeldung bezieht sich auch auf eine Teigverarbeitungsanlage zum Erzeugen von Teigprodukten, die eine Teigverarbeitungsvorrichtung gemäß einem der vorangehenden Ansprüche umfasst. Besonders günstig ist es, wenn dabei die Teigverarbeitungsvorrichtung dazu konfiguriert ist, aus einer im Wesentlichen ungeformten Teigmasse ein Teigband zu formen.

Eine Teigverarbeitungsanlage kann neben der Teigverarbeitungsvorrichtung weitere Arbeitsstationen aufweisen. Beispielhaft sind Schneidstationen, Laminiervorrichtungen, Befüllungsstationen oder Berieselungsstationen denkbar. Eine Teigmasse kann beispielsweise als im Wesentlichen ungeformt angesehen werden, wenn sie noch nicht gezielt auf ein vordefiniertes Maß gebracht, bspw. gewalzt und/oder beschnitten, wurde. Als im Wesentlichen ungeformte Teigmasse kann z. B. ein Teigstrang angesehen werden, der aus mehreren Portionen einer definierten Masse erzeugt und lediglich zur Verbindung der Portionen gewalzt wurde, jedoch nicht auf eine vorbestimmte Dicke. Als ein Teigband kann eine bandförmige Masse von Teig angesehen werden, die gezielt geformt, bspw. gewalzt und/oder beschnitten, wurde um ein vorbestimmtes Maß, insbesondere eine vorbestimmte Breite und eine vorbestimmte Dicke, zu erreichen.

Die Erfindung bezieht sich auf eine Teigverarbeitungsvorrichtung bzw. auf eine Teigverarbeitungsanlage der vorstehend beschriebenen Art. Im Folgenden wird beispielhaft eine bevorzugte Ausführungsform anhand von Zeichnungen näher erläutert.
Figur 1 zeigt eine schematische Seitenansicht einer Teigverarbeitungsanlage mit verschiedenen Stationen.
Figur 2 zeigt Komponenten einer Teigverarbeitungsvorrichtung in einer schematischen seitlichen Schnittansicht.
Figur 3 zeigt eine schematische Frontalansicht einer Teigverarbeitungsvorrichtung mit Blickrichtung entgegen der Produktionsrichtung.
Figur 3A ist eine Detailansicht eines Abschnitts von Figur 3.
Figur 4 zeigt eine schematische Seitenansicht einer Teigverarbeitungsanlage mit verschiedenen Stationen, wie sie aus dem Stand der Technik bekannt ist.

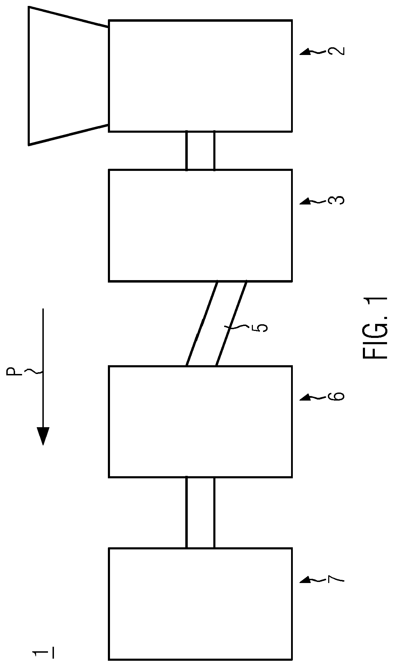

In Figur 1 ist eine schematische Seitenansicht einer Teigverarbeitungsanlage 1 dargestellt. Die Teigverarbeitungsanlage 1 kann mehrere Stationen umfassen. Zwischen den Stationen kann Teig durch verschiedene Fördereinrichtungen förderbar sein. Zu Beginn der Teigverarbeitung kann Teig in eine Portionierstation 2 eingefüllt werden. Die Teigverarbeitungsanlage 1 kann die Portionierstation 2 umfassen. Die Portionierstation 2 kann dazu eingerichtet sein, die eingefüllte Teigmasse in Portionen, die eine gewünschte Masse aufweisen, zu teilen. Dadurch kann ermöglicht werden, dass eine genau definierte Masse von Teig durch die Teigverarbeitungsanlage 1 verarbeitet wird.

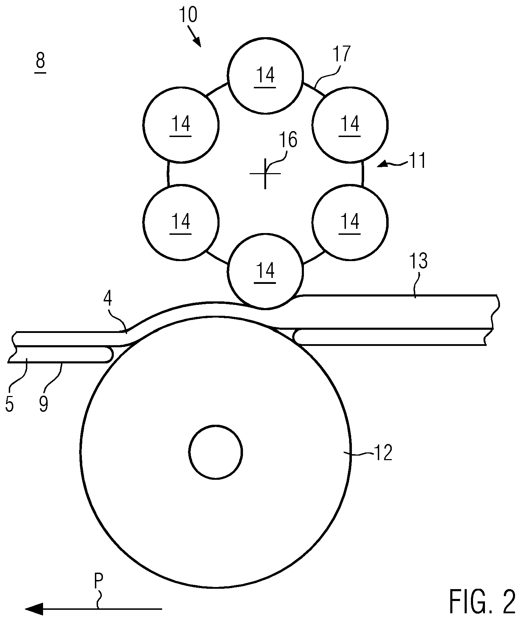

Die Teigverarbeitungsanlage 1 kann des Weiteren eine Teigbandformstation 3 aufweisen. Die Teigbandformstation 3 kann dazu konfiguriert sein, aus einem im Wesentlichen ungeformten Strang aus Teigportionen ein Teigband 4 (siehe Figur 2) zu formen. Dies wird im Folgenden noch näher erläutert werden. Es kann eine Fördervorrichtung 5 vorgesehen sein. Auf der Fördervorrichtung 5 kann das Teigband 4 abgelegt werden. Die Fördervorrichtung 5 kann dazu konfiguriert sein, Teig, insbesondere das Teigband 4, in einer Produktionsrichtung P zu fördern. Stromabwärts der Teigbandformstation 3 können, wie im Ausführungsbeispiel dargestellt, weitere Stationen zur Verarbeitung des fertiggeformten Teigbands 4 vorgesehen sein. Wie in Figur 1 dargestellt, kann die Teigverarbeitungsanlage 1 eine erste Arbeitsstation 6 umfassen. Es ist ebenfalls denkbar, dass, wie ebenfalls in Figur 1 dargestellt, die Teigverarbeitungsanlage 1 eine zweite Arbeitsstation 7 umfasst. Bei einer oder mehrerer der Arbeitsstationen 6, 7 kann es sich um eine Schneidstation handeln. Es ist jedoch eine Vielzahl von verschiedenen Arten und Typen von Arbeitsstationen denkbar.

Wie im vorliegenden Ausführungsbeispiel, kann die Teigbandformstation 3 eine Teigverarbeitungsvorrichtung 8 enthalten. In Figur 2 sind Komponenten der Teigverarbeitungsvorrichtung 8 in einer schematischen seitlichen Schnittansicht dargestellt. Die Teigverarbeitungsvorrichtung 8 kann die Fördervorrichtung 5 umfassen. Die Fördervorrichtung 5 kann beispielsweise ein Förderband 9 enthalten. Die Teigverarbeitungsvorrichtung 8 kann des Weiteren eine Walzstation 10 umfassen. Wie in Figur 2 dargestellt, kann die Walzstation 10 eine Satellitenwalze 11 umfassen. Die Walzstation 10 kann des Weiteren eine Gegenwalze 12 umfassen. Die Satellitenwalze 11 und die Gegenwalze 12 können einander gegenüberliegend angeordnet sein. Die Walzstation 10 kann dazu konfiguriert sein, Teig zwischen der Satellitenwalze 11 und der Gegenwalze 12 zu walzen. Dabei kann ein im Wesentlichen ungeformter Teigstrang 13 zu dem Teigband 4 geformt werden. Im Folgenden kann "Teig" zusammenfassend für das geformte Teigband, den im Wesentlichen ungeformten Teigstrang 13 sowie den Teig im Übergangszustand zwischen Teigstrang 13 und Teigband 4 verwendet werden. Die Satellitenwalze kann mindestens zwei Walzen 14 umfassen. Im vorliegenden Ausführungsbeispiel sind sechs Walzen 14 vorgesehen. Die Walzen 14 können zum Eingreifen mit dem Teig konfiguriert sein.

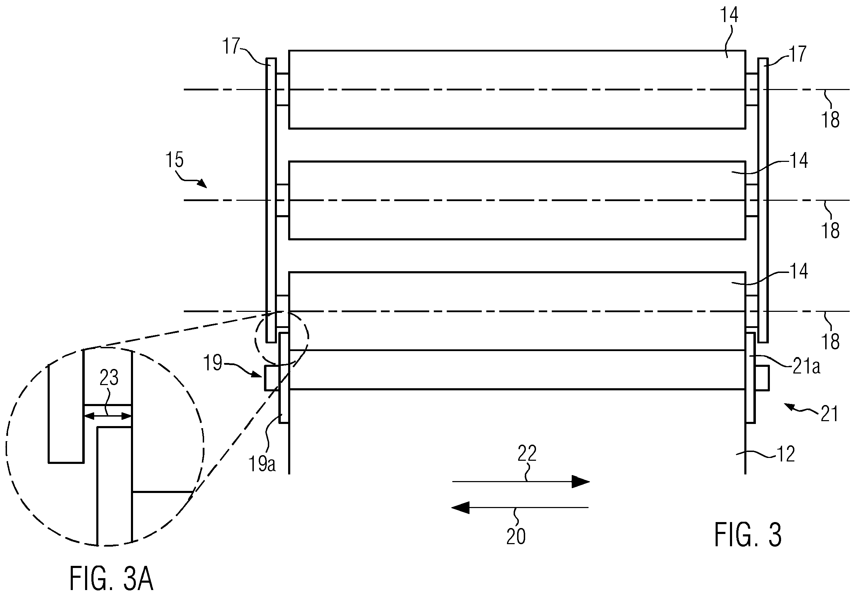

In Figur 3 sind Komponenten der Teigverarbeitungsvorrichtung 8 in einer schematischen Frontalansicht mit Blickrichtung entgegen der Produktionsrichtung P dargestellt. Nun ist erkennbar, dass die Satellitenwalze 11 eine Trommel 15 umfassen kann. Die Trommel 15 kann um eine Trommelachse 16 (siehe Figur 2) rotierbar sein. Durch eine Rotation der Trommel 15 können die Walzen 14 um die Trommelachse 16 drehbar sein. Die Trommel weist wie in Figur 3 dargestellt, zwei Platten 17 auf. Die Walzen 14 sind jeweils zwischen den zwei Platten 17 angeordnet. Die Walzen 14 können dabei an den Platten 17 jeweils rotierbar gelagert sein. Generell können die Walzen 14 jeweils um eine Walzenachse 18 rotierbar sein. Die Walzenachsen 18 können jeweils parallel zu der Trommelachse 16 orientiert sein.

Die Walzstation 10 kann ein erstes Führungselement 19 umfassen. Das erste Führungselement 19 kann dazu konfiguriert sein, ein Ausweichen des Teigs 4, 13 in einer ersten Bewegungsrichtung 20 zu begrenzen. Die erste Begrenzungsrichtung 20 ist quer, vorzugsweise senkrecht, zu der Produktionsrichtung P orientiert. Das erste Führungselement 19 ist des Weiteren dazu konfiguriert, das Fördern des Teigs 4, 13 zu unterstützen. Das erste Führungselement 19 kann eine rotierende Scheibe 19a aufweisen.

Wie in Figur 3 ebenfalls dargestellt, kann die Teigverarbeitungsvorrichtung 8 ein zweites Führungselement 21 umfassen. Das zweite Führungselement 21 kann dazu konfiguriert sein, ein Ausweichen des Teigs 4, 13 in einer zweiten Bewegungsrichtung 22 zu begrenzen. Die zweite Begrenzungsrichtung 22 kann der ersten Begrenzungsrichtung 20 entgegengesetzt orientiert sein. Das zweite Führungselement 21 kann mit Bezug auf die Satellitenwalze 11 und/oder die Gegenwalze 12 dem ersten Führungselement 19 gegenüberliegend angeordnet sein. Die Satellitenwalze 11 kann zwischen dem ersten Führungselement 19 und dem zweiten Führungselement 21 angeordnet sein. Wie im vorliegenden Ausführungsbeispiel erkennbar, ist es denkbar, dass nicht alle Komponenten der Satellitenwalze 11 zwischen den Führungselementen 19, 21 angeordnet sind. Insbesondere können die Walzen 14 zwischen den Führungselement 19, 21 angeordnet sein. Auch das zweite Führungselement 21 kann eine rotierbare Scheibe 21a umfassen.

Wie in Figur 3 erkennbar, ist zwischen den Platten 17 einerseits und den Walzen 14 andererseits jeweils ein Abstand 23 vorgesehen. Der Abstand 23 kann parallel zu der Trommelachse 16 orientiert sein. Der Abstand 23 kann Raum für Lagervorrichtungen zur drehbaren Lagerung der Walzen 14 ermöglichen und oder Reibung zwischen den Platten 17 und den Walzen 14 vermeiden. Der Abstand 23 ist derart dimensioniert, das erste Führungselement 19 und oder das zweite Führungselement 21 wenigstens teilweise aufzunehmen. Insbesondere kann die rotierbare Scheibe 19a in den durch den Abstand 23 hergestellten Spalt zwischen einer der Platten 17 und den Walzen 14 hineinragen. Ähnliches gilt für die zweite rotierbare Scheibe 21a.

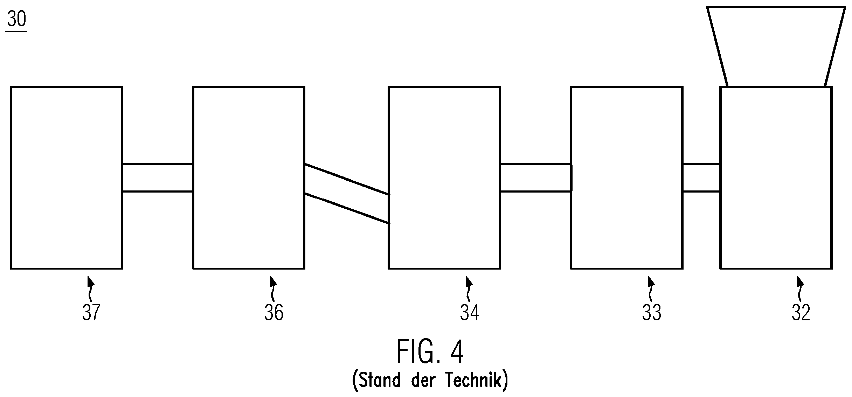

In Figur 4 ist eine schematische Seitenansicht einer Teigverarbeitungsanlage 30 gemäß dem Stand der Technik dargestellt. Die Teigverarbeitungsanlage 30 weist eine Portionierstation 32 auf, in die Teig eingefüllt werden kann. Stromabwärts von der Portionierstation 32 ist eine Teigbandformstation 33 angeordnet. Nachdem aus einem im Wesentlichen ungeformter Teigstrang durch die Teigbandformstation 33 ein Teigband geformt wurde, wird das Teigband in einer Ausrollstation 34 auf eine gewünschte Dicke ausgerollt. Nachdem die gewünschte Dicke erreicht wurde, wird das Teigband an die weiteren Arbeitsstationen 36 und 37 weitergeleitet. Ein Fachmann erkennt, dass durch die erfindungsgemäße Konfiguration der Teigverarbeitungsvorrichtung 8 auf eine separate Ausrollstation, wie sie in Teigverarbeitungsanlagen des Stands der Technik, wie zum Beispiel der Teigverarbeitungsanlage 30, erforderlich ist, verzichtet werden kann. Dies kann vorteilhaft sein, um Stellfläche für Teigverarbeitungsanlagen einzusparen.

## Patentansprüche

1. Teigverarbeitungsvorrichtung (8) mit einer Fördervorrichtung (5), die zum Fördern des Teigs (4, 13) in einer Produktionsrichtung (P) konfiguriert ist, und einer Walzstation (10), wobei die Walzstation (10) umfasst:
eine Satellitenwalze (11) mit einer Trommel (15) und mindestens zwei Walzen (14), die zum Eingreifen mit dem Teig (4, 13) konfiguriert sind, wobei die Trommel (15) um eine Trommelachse (16) rotierbar ist, und durch eine Rotation der Trommel (15) die Walzen (14) um die Trommelachse (16) drehbar sind, und
eine Gegenwalze (12), die der Satellitenwalze (11) gegenüberliegend angeordnet ist, wobei die Walzstation (10) dazu konfiguriert ist, den Teig (4, 13) zwischen der Satellitenwalze (11) und der Gegenwalze (12) zu walzen,
wobei die Walzstation (10) ein erstes Führungselement (19) umfasst, das dazu konfiguriert ist, ein Ausweichen des Teigs (4, 13) in einer ersten Begrenzungsrichtung (20) zu begrenzen, die quer, vorzugsweise senkrecht, zu der Produktionsrichtung (P) orientiert ist, und wobei das erste Führungselement (19) des Weiteren dazu konfiguriert ist, das Fördern des Teigs (4, 13) zu unterstützen
wobei die Trommel (15) zwei Platten (17) aufweist, wobei die Walzen (14) jeweils zwischen den zwei Platten (17) angeordnet sind, zwischen den Platten (17) und den Walzen (14) jeweils ein parallel zu der Trommelachse (16) orientierter Abstand (23) vorgesehen ist, wodurch ein Spalt zwischen einer der Platten (17) und den Walzen (14) hergestellt wird, **dadurch gekennzeichnet, dass** der Abstand (23) dimensioniert ist, um das erste Führungselement (19) wenigstens teilweise in dem Spalt aufzunehmen.

2. Teigverarbeitungsvorrichtung nach Anspruch 1, wobei die Teigverarbeitungsvorrichtung (8) ein zweites Führungselement (21) umfasst, das dazu konfiguriert ist, ein Ausweichen des Teigs (4, 13) in einer zweiten Begrenzungsrichtung (22) zu begrenzen, die der ersten Begrenzungsrichtung (20) entgegengesetzt orientiert ist.

3. Teigverarbeitungsvorrichtung nach Anspruch 2, wobei das zweite Führungselement (21) mit Bezug auf die Satellitenwalze (11) und/oder die Gegenwalze (12) dem ersten Führungselement (19) gegenüberliegend angeordnet ist.

4. Teigverarbeitungsvorrichtung nach Anspruch 2 oder 3, wobei das erste und/oder das zweite Führungselement (21) jeweils eine rotierbare Scheibe (19a, 21a) aufweist.

5. Teigverarbeitungsvorrichtung nach Anspruch 4, wobei die rotierbare Scheibe (19a, 21a) antreibbar ist, vorzugsweise motorisiert und/oder mit einer Fördergeschwindigkeit der Fördervorrichtung (5) synchronisiert.

6. Teigverarbeitungsvorrichtung nach einem der vorangehenden Ansprüche, wobei die Walzen (14) jeweils um eine Walzenachse (18) rotierbar sind, die parallel zu der Trommelachse (16) orientiert ist.

7. Teigverarbeitungsvorrichtung nach einem der vorangehenden Ansprüche, wobei die Walzen (14) an den Platten (17) jeweils rotierbar gelagert sind.

8. Teigverarbeitungsanlage (1) zum Erzeugen von Teigprodukten, die eine Teigverarbeitungsvorrichtung (8) gemäß einem der vorangehenden Ansprüche umfasst.

9. Teigverarbeitungsanlage nach Anspruch 8, wobei die Teigverarbeitungsvorrichtung (8) dazu konfiguriert ist, aus einer im Wesentlichen ungeformten Teigmasse (13) ein Teigband (4) zu formen.

## Claims

1. Dough processing device (8) having a conveyor (5), which is configured to convey dough (4, 13) in a production direction (P), and a rolling station (10), wherein the rolling station (10) comprises:
a satellite roller (11) having a drum (15) and at least two rollers (14), which are configured to engage the dough (4, 13), wherein the drum (15) is rotatable about a drum axis (16), and the rollers (14) are revolvable about the drum axis (16) by rotation of the drum (15), and
a counter roller (12), which is disposed opposite the satellite roller (11), wherein the rolling station (10) is configured to roll the dough (4, 13) between the satellite roller (11) and the counter roller (12),
wherein the rolling station (10) comprises a first guiding element (19), which is configured to confine an evasion of the dough (4, 13) in a first confinement direction (20), which is oriented transversely, preferably perpendicularly, with respect to the production direction (P), and
wherein the first guiding element (19) is further configured to facilitate the conveying of the dough (4, 13)
wherein the drum (15) has two plates (17), wherein the rollers (14) are each disposed between the two plates (17), a distance (23), which is oriented parallelly with respect to the drum axis (16), is respectively provided between the plates (17) and each of the rollers (14), whereby a gap between one of the plates (17) and the rollers (14) is created, **characterized in that** the distance (23) is dimensioned to at least partially receive the guiding element (19) in the gap.

2. Dough processing device according to claim 1, wherein the dough processing device (8) comprises a second guiding element (21), which is configured to confine an evasion of the dough (4, 13) in a second confinement direction (22), which is oriented opposite to the first confinement direction (20).

3. Dough processing device according to claim 2, wherein the second guiding element (21) is disposed opposite of the first guiding element (19) with respect to the satellite roller (11) and/or the counter roller (12).

4. Dough processing device according to claim 2 or 3, wherein the first and/or the second guiding element (21) respectively has a rotary disc (19a, 21a).

5. Dough processing device according to claim 4, wherein the rotary disc (19a, 21a) is drivable, preferably motorized and/or synchronized with a conveying speed of the conveyor (5).

6. Dough processing device according to one of the preceding claims, wherein the rollers (14) each are rotatable about a roller axis (18), which are oriented parallelly with respect to the drum axis (16).

7. Dough processing device according to one of the preceding claims, wherein the rollers (14) each are rotatably supported at the two plates (17).

8. Dough processing facility (1) for producing dough products comprising a dough processing device (8) according to one of the preceding claims.

9. Dough processing facility according to claim 8, wherein the dough processing device (8) is configured to form a dough sheet (4) from a substantially unformed dough mass (13).

## Revendications

1. Dispositif de traitement de pâte (8) comportant un dispositif de convoyage (5) configuré pour convoyer la pâte (4, 13) dans une direction de production (P) ainsi qu'une station de laminage (10), dans lequel la station de laminage (10) comprend :
un rouleau satellite (11) avec un tambour (15) et au moins deux rouleaux (14) configurés pour s'engager avec la pâte (4, 13), dans lequel le tambour (15) est rotatif autour d'un axe de tambour (16) et les rouleaux (14) sont rotatifs autour de l'axe de tambour (16) par une rotation du tambour (15), et
un contre-rouleau (12) agencé à l'opposé du rouleau satellite (11), dans lequel la station de laminage (10) est configurée pour laminer la pâte (4, 13) entre le rouleau satellite (11) et le contre-rouleau (12),
dans lequel la station de laminage (10) comprend un premier élément de guidage (19) qui est configuré pour limiter une déviation de la pâte (4, 13) dans une première direction de délimitation (20) qui est orientée transversalement, de préférence perpendiculairement, à la direction de production (P), et dans lequel le premier élément de guidage (19) est en outre configuré pour assister le convoyage de pâte (4, 13),
dans lequel le tambour (15) comporte deux plaques (17), dans lequel les rouleaux (14) sont agencés chacun entre les deux plaques (17) et une distance (23) orientée parallèlement à l'axe de tambour (16) est aménagée respectivement entre les plaques (17) et les rouleaux (14), créant ainsi une fente entre l'une des plaques (17) et les rouleaux (14),
**caractérisé en ce que** la distance (23) est dimensionnée pour recevoir au moins partiellement le premier élément de guidage (19) dans la fente.

2. Dispositif de traitement de pâte selon la revendication 1, dans lequel le dispositif de traitement de pâte (8) comprend un deuxième élément de guidage (21), qui est configuré pour limiter une déviation de la pâte (4, 13) dans une deuxième direction de délimitation (22) qui est orientée à l'opposé de la première direction de délimitation (20).

3. Dispositif de traitement de pâte selon la revendication 2, dans lequel le deuxième élément de guidage (21) est agencé à l'opposé du premier élément de guidage (19) par rapport au rouleau satellite (11) et/ou au contre-rouleau (12).

4. Dispositif de traitement de pâte selon la revendication 2 ou 3, dans lequel les premier et/ou deuxième éléments de guidage (21) comportent chacun un disque rotatif (19a, 21a).

5. Dispositif de traitement de pâte selon la revendication 4, dans lequel le disque rotatif (19a, 21a) est entraîné, de préférence motorisé et/ou synchronisé avec une vitesse de convoyage du dispositif de convoyage (5).

6. Dispositif de traitement de pâte selon l'une des revendications précédentes, dans lequel les rouleaux (14) sont chacun rotatifs autour d'un axe de rouleau (18) qui est orienté parallèlement à l'axe de tambour (16).

7. Dispositif de traitement de pâte selon l'une des revendications précédentes, dans lequel les rouleaux (14) sont chacun montés de manière rotative sur les plaques (17).

8. Installation de traitement de pâte (1) pour la production de produits à base de pâte, comprenant un dispositif de traitement de pâte (8) selon l'une des revendications précédentes.

9. Installation de traitement de pâte selon la revendication 8, dans laquelle le dispositif de traitement de pâte (8) est configuré pour former une bande de pâte (4) à partir d'une masse de pâte (13) substantiellement non façonnée.
